# EUROPÄISCHE PATENTSCHRIFT

(11) **EP 0 556 633 B1**
(45) Veröffentlichungstag und Bekanntmachung des Hinweises auf die Patenterteilung: **23.04.1997**
(21) Anmeldenummer: 93101606.7
(22) Anmeldetag: 03.02.1993
(51) Int. Cl.: H04N 3/19, H01F 38/42

(54) **Zeilentransformator für Fernsehgeräte**
Line transformer for television receivers
Transformateurs de lignes pour récepteurs de télévision

(30) Priorität: 17.02.1992 DE 9201994 U
(43) Veröffentlichungstag der Anmeldung: 25.08.1993
(73) Patentinhaber: NOKIA TECHNOLOGY GmbH, 75175 Pforzheim (DE)
(72) Erfinder: Fraunhofer, Karl-Heinz, W-8440 Straubing (DE)

(56) Entgegenhaltungen:
- EP-A- 0 068 494
- EP-A- 0 269 074
- PATENT ABSTRACTS OF JAPAN vol. 7, no. 8 (E-152)(1153) 13. Januar 1983 &JP-A-57 166 777
- PATENT ABSTRACTS OF JAPAN vol. 9, no. 136 (E-320)(1859) 12. Juni 1985 & JP-A-60 18 904

## Beschreibung

Die Erfindung befaßt sich mit der Ausbildung von Zeilentransformatoren für Fernsehgeräte, die über eine gemeinschaftliche Einstelleinheit für die Fokus- und Gitter-2-Spannung sowie eine separate Zuspeisung einer Gleichspannung zur Erzeugung einer stabilen Gitter-2-Spannung besitzen.

### Stand der Technik

EP-A-0 269 074 offenbart einen Zeilentransformator gemäß dem Stand der Technik. Zeilentransformatoren sind im Stand der Technik weitgehend bekannt, so daß an dieser Stelle deren Aufbau auf eine knappe Darstellung beschränkt werden kann.

Üblicherweise sind die Primär- und Sekundärwicklungen von Zeilentransformatoren in einem Isolierstoffgehäuse eingesetzt und mittels Vergußmasse vergossen. Die Einstelleranordnung, welche die Einsteller, bestehend aus veränderlichen und festen Widerständen für die Fokus- und Gitter-2-Spannung aufweisen, ist in ein Gehäuse integriert. Ferner weist die Einstelleranordnung Kontaktpunkte auf, welche die elektrische Kontaktierung der auf dem Substrat angeordneten Widerstandsbahn mit der Hochspannung, dem Nullpotential und den Abgangsleitungen für die Fokus- und Gitter-2-Spannung erlauben. Soll eine sehr stabile Gitter-2-Spannung erzeugt werden, so ist es geläufig, dem Fokus-Schirmgitter-Regelsubstrat eine stabile Gleichspannung zuzuführen.

Anordnungen, die über eine separate Gleichspannungszuführung verfügen, sind üblicherweise in einem Gehäuse integriert, welches vom Isolierstoffgehäuse entfernt angeordnet ist. Die Hochspannungsversorgung zwischen der Sekundärspule und der Hochspannungsanschluß auf dem Substrat wird dann von einem isolierten Hochspannungskabel übernommen.

Auch sind Anordnungen bekannt, die zur Erzeugung einer sehr stabilen Gitter-2-Spannung kein gemeinsames Fokus-Schirmgitter-Regelsubstrat aufweisen. In diesen Fällen ist lediglich die Regelanordnung für die Fokusspannung mit dem Isolierstoffgehäuse verbunden. Die Erzeugung der stabilen Gitter-2-Spannung erfolgt in einem separaten Bauteil, welches die erforderliche Gitter-2-Spannung separat erzeugt und in einem eigenständigen Gehäuse angeordnet ist.

Derartige Anordnungen, die über eine separate Gitter-2-Spannungsaufbereitung verfügen oder ein gemeinsames, aber vom Isolierstoffgehäuse entfernt angeordnetes gemeinsames Regelsubstrat für die Fokus- und Gitter-2-Spannung aufweisen, sind sehr aufwendig und daher auch kostenintensiv. Gerade bei der letzten Anordnung wird es als besonders nachteilig angesehen, daß der Hochspannungsanschluß zwischen dem Isolierstoffgehäuse und dem Gehäuse für die Einstelleranordnung als Kabelleitung ausgeführt werden muß. Letzteres deshalb, weil hierdurch an jedem Gehäuse hochspannungssichere Anschlußanordnungen ausgebildet werden müssen.

Daher liegt der Erfindung die Aufgabe zugrunde, einen Zeilentransformator mit Einstelleranordnung anzugeben, der die vorbezeichneten Nachteile vermeidet.

### Darstellung der Erfindung

Diese Aufgabe wird durch die in Anspruch 1 angegebenen Merkmale gelöst.

Vorteilhafte Ausbildungen der Erfindung sind in den Ansprüchen 2 bis 6 angegeben.

Sehr vorteilhaft ist es, wenn gemäß den Ansprüchen 3 oder 4, die leitende Verbindungen zwischen den Hochspannungsanschlüssen im Isolierstoffgehäuse und auf dem Substrat so ausgebildet ist, daß mit dem Verbinden des Gehäuses der Einstelleranordnung mit dem Isolierstoffgehäuse zeitgleich eine elektrisch leitende Kontaktierung erreicht wird.

Auf eine eigenständige Isolierung der Hochspannungsverbindung kann dann verzichtet werden, wenn gemäß Anspruch 5 der Bereich in dem die Hochspannungsverbindung ausgeführt werden soll, mit Kanälen versehen ist. Diese Kanäle bewirken, daß, wenn das Isolierstoffgehäuse mit Vergußmasse verfüllt wird, diese Vergußmasse auch durch die Kanäle hindurchdringt und somit den Bereich, in dem die Hochspannungskontaktierung ausgeführt ist, vollständig mit Vergußmasse ausfüllt.

Sind nach Anspruch 6 zumindest die Kontaktbereiche für das Nullpotential, die stabile Gleichspannung und die Abgangsleitung für die Gitter-2-Spannung als Kontaktschwerter ausgeführt und an der Fläche aus der aus Isolierstoffgehäuse und Einstellergehäuse gebildeten Einheit herausgeführt, die später auf der Schaltungsplatine aufgesetzt wird, ist die Kontaktierung dieser Anschlüsse stark vereinfacht. Insbesondere ist in diesem Falle eine gleichzeitige Kontaktierung mit den übrigen Anschlüssen des Zeilentrafos, die ebenfalls an dieser Fläche befindlich sind, möglich.

### Kurze Darstellung der Figuren

Es zeigen:
- Figur 1: einen Zeilentransformator in perspektivischer Darstellung,
- Figur 2: eine Draufsicht auf die Substratplatte,
- Figur 3: eine Seitenansicht des Isolierstoffgehäuses,
- Figur 4: eine Schnittdarstellung entlang der Linie A, A gemäß Figur 3,
- Figur 5: eine Seitenansicht des Gehäuses, in welchem die Substratplatte integriert ist, und
- Figur 6: eine Schnittdarstellung entlang der Linie B, B gemäß Figur 5.

### Wege zum Ausführen der Erfindung

Die Erfindung soll uns nun anhand der Figuren näher erläutert werden.

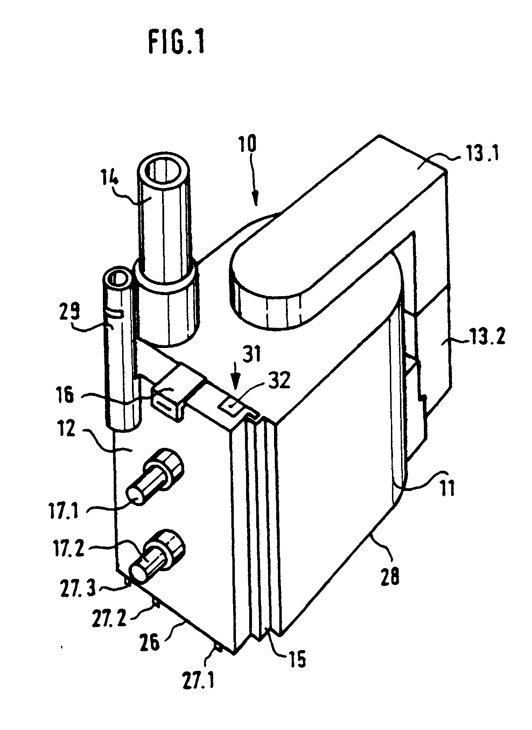

Die in Figur 1 gezeigte Perspektive zeigt einen Zeilentransformator 10. Dieser Zeilentransformator 10 wird im wesentlichen vom Isolierstoffgehäuse 11 und dem Gehäuse 12 sowie den beiden Ferritkernhälften 13.1 und 13.2 gebildet. Auf die Darstellung der im Isolierstoffgehäuse 11 angeordneten und in Vergußmasse eingebetteten Primär- und Sekundärspulen wurde verzichtet. Aus dem Isolierstoffgehäuse 11 ragt der Anschlußstutzen 14 heraus. An diesem Anschlußstutzen 14 wird später die Hochspannungsleitung für die Bildröhre kontaktiert (nicht dargestellt). Ferner weist das Isolierstoffgehäuse zwei Schiebesitzführungen 15 auf. In diese Schiebesitzführungen 15 ist das Gehäuse 12 vollständig eingeschoben und mit dem am Isolierstoffgehäuse 11 angesetzten Haken 16 fest verrastet. Der Haken 16 ist dabei so ausgebildet, daß er gleichzeitig den Schiebeweg des Gehäuses 12 in den Schiebesitzführungen 15 nach oben zum Anschlußstutzen 14 hin begrenzt. Das Gehäuse 12 weist mit der Fläche, welche dem Isolierstoffgehäuse 11 abgewandt ist, zwei Einstellknöpfe 17.1 und 17.2 auf. Innerhalb des im wesentlichen geschlossenen Gehäuses 12 ist die Einstelleranordnung (in Figur 1 nicht dargestellt) integriert.

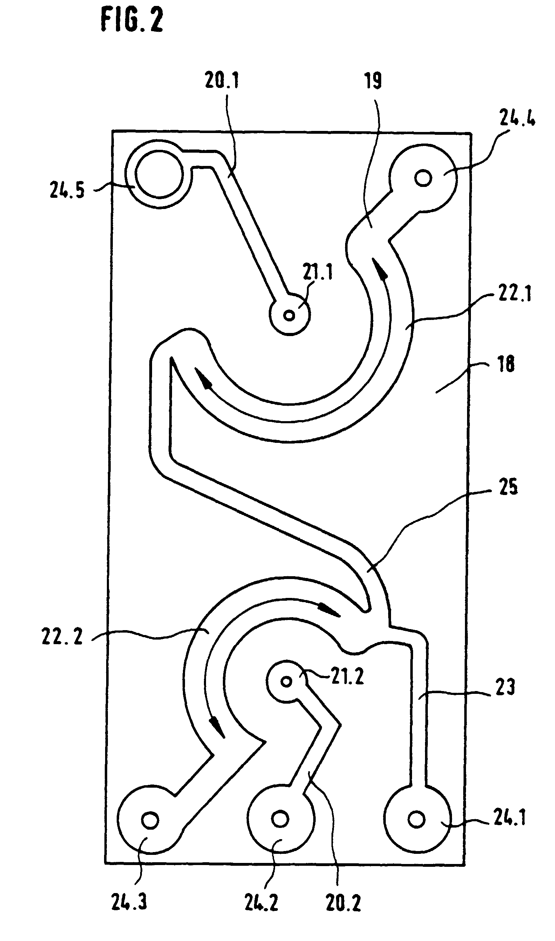

Die Einstelleranordnung, welche in Figur 2 näher veranschaulicht ist, wird von einer Substratplatte 18 gebildet, auf welche die Widerstandsbahn 19 und die Abgangsleiterbahnen 20.1 und 20.2 angeordnet sind. Ist die Substratplatte 18 im Gehäuse 12 eingesetzt, ist das Ende 21.1 der Abgangsleitung 20.1 mit dem kreisförmigen Bereich 22.1 der Widerstandsbahn 19 mittels eines Schleifers (nicht dargestellt) verbunden. Eine ebensolche Verbindung ist auch zwischen dem Ende 21.2 und dem Bereich 22.2 ausgeführt. Die Schleifer sind mit den Einstellknöpfen 17.1 und 17.2 mechanisch verbunden. Durch Drehung der Einstellknöpfe 17.1 und 17.2 kann die Spannung in den Abgangsleiterbahnen 20.1 und 20.2 modifiziert werden.

Zusätzlich ist auf der Substratplatte 18 noch eine weitere Leiterbahn 23 angeordnet. Diese Leiterbahn 23 ist vom Kontaktpunkt 24.1 zu dem Punkt geführt, an welchem das Widerstandsleitungsstück 25 in den Bereich 22.2 einmündet. Über die zusätzliche Leiterbahn 23 wird der Widerstandsbahn 19 eine stabile Gleichspannung zugeführt, um die am Kontaktpunkt 24.2 abgreifbare Gitter-2-Spannung zu stabilisieren. Der Kontaktpunkt 24.3 ist der Masseanschluß. Am Kontaktpunkt 24.4 wird die von der Spule kommende Hochspannung der Widerstandsbahn 19 zugeführt. Die Fokusspannung kann am Kontaktpunkt 24.5 abgegriffen werden.

Die Substratplatte ist so in dem Gehäuse 12 (Figur 1) eingesetzt, daß sich die Kontaktpunkte 24.1, 24.2 und 24.3 nahe der Kante 26 des Gehäuses 12 befinden. Die Kontaktpunkte 24.1 bis 24.3 sind mit Kontaktstiften 27.1 bis 27.3 versehen, welche aus dem Gehäuse 12 herausragen und später, wenn der Zeilentransformator 10 mit der Fläche 28 auf der Schaltungsplatine des Fernsehgerätes aufgesetzt wird, eine sehr einfache Art der Kontaktierung erlaubt. Der Kontaktpunkt 24.5 (Figur 2) ist mit einem Kontaktstift (nicht dargestellt) verbunden, welches bis in die am Gehäuse 12 angeordnete Tülle 29 geführt ist. An dieser Tülle 29 erfolgt später die Kontaktierung der Fokusleitung (nicht dargestellt).

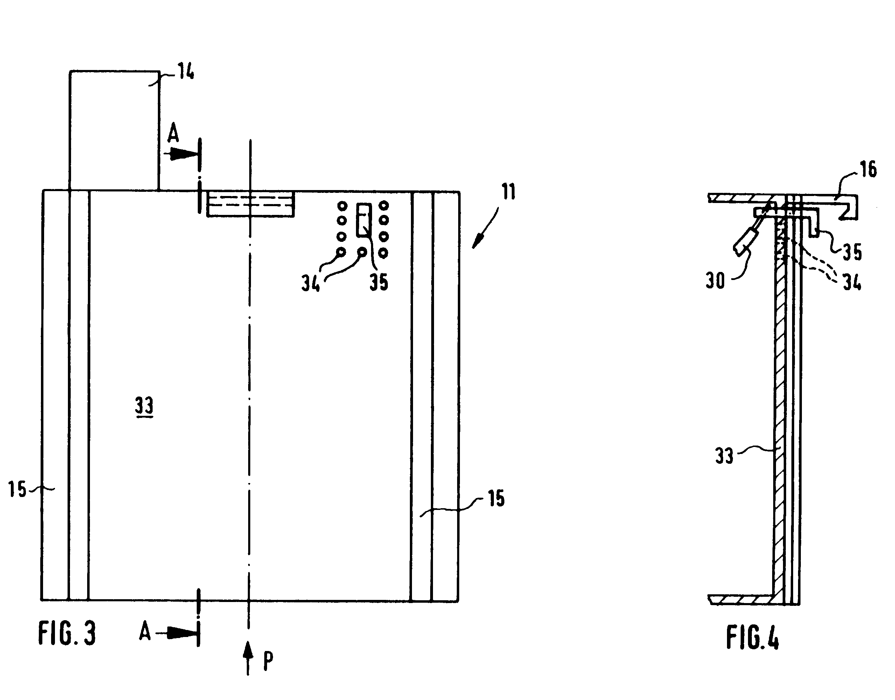

Die Kontaktierung zwischen dem Kontaktpunkt 24.4 (Figur 2) und der bis zur Wandung des Isolierstoffgehäuses 11 geführten Hochspannungszuleitung 30 (Figur 4) erfolgt unterhalb des Ausschnittes 31 (Figur 1). Die genaue Art der Kontaktierung ist in Figur 1 nicht dargestellt, da der Ausschnitt 31 bereits mit Vergußmasse 32 verfüllt ist.

Figur 3 zeigt das Isolierstoffgehäuse 11 mit der Seite, an welcher das Gehäuse 12 in die Schiebesitzführungen 15 einschiebbar ist. Deutlich erkennbar ist, daß die Wandung 33 des Isolierstoffgehäuses 11 mit Kanälen 34 versehen ist. Wie Figur 4 besser hervorhebt, ist in dem Bereich der Wandung 33, in welcher die Kanäle 34 angeordnet sind, ein Kontaktschwert 35 durchgeführt. Das eine Ende Kontaktschwerts 35 ist mit der Hochspannungszuleitung 30 verbunden. Das andere Ende des Kontaktschwertes 35 ist rechtwinklig abgebogen. Zwischen dem abgebogenen Ende des Kontaktschwerts 35 und der Wandung 33 ist ein geringer Abstand eingehalten.

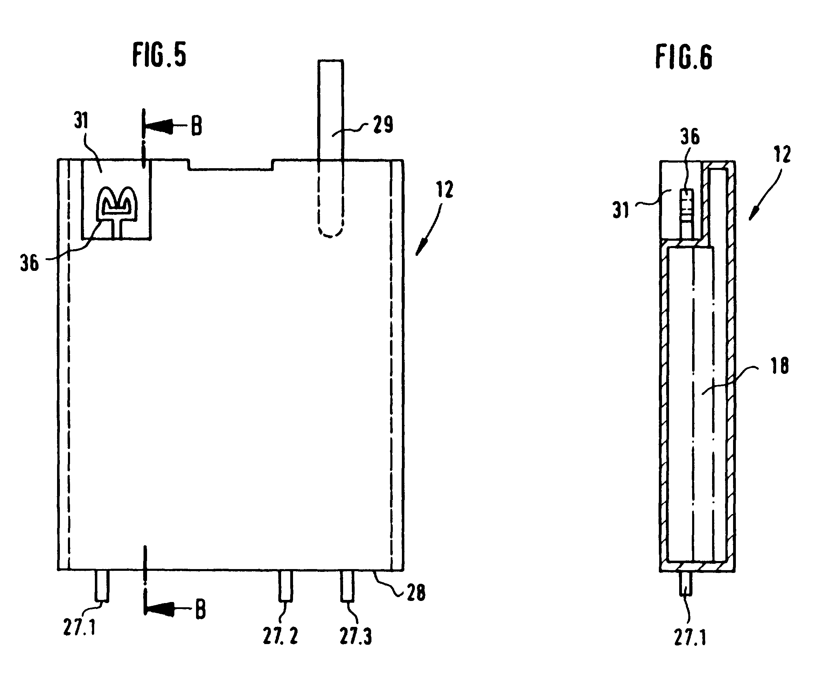

Figur 5 zeigt die Rückfront des Gehäuses 12. In die Ausschnitt 31 ist ein Kontaktschuh 36 eingesetzt und mit dem Kontaktpunkt 24.4 der Substratplatte 18 (nicht dargestellt) verbunden. Auch wird in dieser Figur deutlich veranschaulicht, daß die Kontaktstifte 25.1 bis 25.3 an der Kante 26 aus dem Gehäuse 12 heraustreten. Die Darstellung des Gehäuses 12 aus Figur 5 ist durch die Schnittzeichnung in Figur 6 weiter klargestellt. In dieser Figur 6 ist auch angedeutet, wie die Substratplatte 18 in dem Gehäuse 12 eingesetzt ist.

Wird nun ein Gehäuse 12 der in Figur 5 gezeigten Art mit dem in Figur 3 gezeigten Isolierstoffgehäuse 11 dadurch verbunden, daß das Gehäuse 12 in Pfeilrichtung P in die Schiebesitzführungen 15 eingeschoben und seiner in Figur 1 gezeigten Endposition zugeführt, schiebt sich der in dem Ausschnitt 31 angeordnete Kabelschuh 36 auf das aus dem Isolierstoffgehäuse 11 herausragende Kontaktschwert 35. Hat das Gehäuse 12 seine Endposition erreicht und sichert der Haken 16 die Lage des Gehäuses 12 ist auch gleichzeitig eine Kontaktierung zwischen der Sekundärspule (nicht dargestellt) und dem Kontaktpunkt 24.4 hergestellt. Die Isolierung von Kontaktschwert 35 und Kontaktschuh 36 erfolgt mit dem Einfüllen der Vergußmasse 32 in das Isolierstoffgehäuse 11. Wird nämlich das Isolierstoffgehäuse 11 von der Fläche 28 aus mit Vergußmasse 32 gefüllt, gelangt die Vergußmasse 32 durch die Kanäle 34 in den Ausschnitt 31. Eine andere Art der Isolierung von Kontaktschwert 35 und Kontaktschuh 36 kann - wenn beispielsweise auf Kanäle 34 verzichtet wird - dadurch erreicht werden, daß die Vergußmasse 32 direkt in den Ausschnitt 31 eingefüllt wird.

Abschließend sei noch darauf hingewiesen, daß der Hochspannungskontakt im Ausschnitt 31 nicht notwendig als Kontaktschuh 36 ausgebildet sein muß. Vielmehr kann in einem anderen - nicht dargestellten - Ausführungsbeispiel die gehäuseseitige Kontaktierung auch dadurch realisiert werden, daß in den Ausschnitt 31 ein mit dem Kontaktpunkt 24.4 verbundenes Leitgummi eingesetzt ist, in welches beim Einschieben des Gehäuses 12 in die Schiebesitzführungen 15 das aus der Wandung 33 des Isolierstoffgehäuses 11 herausragende Kontaktschwert 35 einsticht.

| **Bezugszeichen (BZ) - Verzeichnis für K. Fraunhofer 008** | | | |
|---|---|---|---|
| BZ | Bezeichnung | BZ | Bezeichnung |
| 10 | Zeilentransformator | 23 | Leiterbahn |
| 11 | Isolierstoffgehäuse | 24.1 - 24.4 | Kontaktpunkt |
| 12 | Gehäuse | 25 | Widerstandsleitungsstück |
| 13.1 | Ferritkernhälfte | 26 | Kante |
| 13.2 | Ferritkernhälfte | 27.1 - 27.3 | Kontaktstifte |
| 14 | Anschlußstutzen | 28 | Fläche |
| 15 | Schiebesitzführungen | 29 | Tülle |
| 16 | Haken | 30 | Hochspannungszuleitung |
| 17.1 | Einstellknopf | 31 | Ausschnitt |
| 17.2 | Einstellknopf | 32 | Vergußmasse |
| 18 | Substratplatte | 33 | Wandung |
| 19 | Widerstandsbahn | 34 | Kanäle |
| 20.1 | Anschlußleiterbahn | 35 | Kontaktschwert |
| 20.2 | Anschlußleiterbahn | 36 | Kontaktschuh |
| 21.1 | Ende | 37 | |
| 21.2 | Ende | 38 | |
| 22.1 | Bogen der Windungsbahn | 39 | |
| 22.2 | Bogen der Windungsbahn | 40 | |

## Patentansprüche

1. Zeilentransformator für Fernsehgeräte,
- mit mindestens einer Primär- und einer Sekundärwicklung, die in einem Isolierstoffgehäuse (11) eingesetzt und in Vergußmasse (32) vergossen sind, und
- mit einer Einstelleranordnung zur Einstellung der Fokus- und Gitter-2-Spannung, welche auf dem Prinzip der Widerstandsänderung basiert, welcher zur Stabilisierung der Gitter-2-Spannung eine stabile Gleichspannung zugeführt wird und deren Gehäuse (12) mit dem Isolierstoffgehäuse (11) abstandslos verbunden ist, und bei welcher im Innern des Gehäuses (12) eine Substratplatte (18) angeordnet ist, die eine Widerstandsbahn (19) und eine Mehrzahl von Leiterbahnen (20, 23) trägt und wobei die jeweiligen Bahnen (19, 20, 23) mit Kontaktpunkten (24) zu ihrer elektrischen Kontaktierung versehen sind,
**dadurch gekennzeichnet,**
daß der Kontaktpunkt (24.4), welcher den Hochspannungskontaktpunkt auf der Substratplatte (18) bildet, gleichzeitig mit dem abstandslosen Verbinden der Gehäuse (11, 12) eine elektrisch leitende Verbindung mit einer nahe der Wandung (33) des Isolierstoffgehäuses (11) endenden Hochspannungszuleitung (30) herstellt und daß die elektrische leitfähige Verbindung von Hochspannungszuleitung (30) und Kontaktpunkt (24.4) in Vergußmasse (32) isolierend eingebettet ist.

2. Zeilentransformator nach Anspruch 1,
**dadurch gekennzeichnet,**
daß das Isolierstoffgehäuse (11) Schiebesitzführungen (15) aufweist, in welche das Gehäuse für die Einstelleranordnung (12) eingeschoben ist und daß die Endposition des Gehäuses (12) auf dem Isolierstoffgehäuse (11) mittels eines Hakens (16) gesichert ist.

3. Zeilentransformator nach Anspruch 1 oder Anspruch 2,
**dadurch gekennzeichnet,**
daß der Kontaktpunkt (24.4) auf der Substratplatte (18) mit einem Kontaktschuh (36) verbunden ist, in welchem sich ein mit der Hochspannungszuleitung (30) verbundenes und durch die Wandung (33) hindurchgeführtes Kontaktschwert (35) einschiebt, sobald die beiden Gehäuse (11, 12) mechanisch miteinander verbunden werden.

4. Zeilentransformator nach Anspruch 1 oder 2,
**dadurch gekennzeichnet,**
daß der Kontaktpunkt (24.4) auf der Substratplatte (18) mit einem Leitgummi verbunden ist, in welches sich ein mit der Hochspannungszuleitung (30) und durch die Wandung (33) gestecktes Kontaktschwert (35) einschiebt, sobald die beiden Gehäuse (11, 12) mechanisch miteinander verbunden werden.

5. Zeilentransformator nach einem der Ansprüche 1 bis 4,
**dadurch gekennzeichnet,**
daß in dem Bereich des Isolierstoffgehäuses (11), in welchem das Kontaktschwert (35) aus der Wandung (33) austritt, Kanäle (34) vorhanden sind, welche beim Verfüllen des Isolierstoffgehäuses (11) mit Vergußmasse (32) gewährleisten, daß der Ausschnitt (31) im Gehäuse (12), in welchem der Kontaktschuh (36) angeordnet ist, vollständig mit Vergußmasse (32) verfüllt wird.

6. Zeilentransformator nach Anspruch 1,
**dadurch gekennzeichnet,**
daß die Kontaktpunkte (24.1, 24.2, 24.3) mit Kontaktstiften (27.1, 27.2, 27.3) verbunden sind, und daß die Kontaktstifte (27.1, 27.2, 27.3) durch diejenige Fläche (28) des Transformators (10) hindurchgeführt sind, die später auf der Schaltungsplatine des Fernsehgerätes aufgesetzt wird.

## Claims

1. Line transformer for television sets,
- having at least one primary winding and one secondary winding which are inserted in an insulating-material housing (11) and are encapsulated in an embedding compound (32), and
- having an adjustment system for adjusting the focus voltage and grid to voltage which is based on the principle of resistance change, to which a stable direct voltage is fed to stabilize the grid to voltage and whose housing (12) is connected without spacing to the insulating-material housing (11) and in which there is disposed in the interior of the housing (12) a substrate plate (18) which carries a resistance track (19) and a multiplicity of conductor tracks (20, 23), the respective tracks (19, 20, 23) being provided with contact points (24) for making electrical contact to them,
characterized
in that the contact point (24.4) which forms the high-voltage contact point on the substrate plate (18) makes, simultaneously with the spacing-free connection to the housing (11, 12), an electrically conducting connection to a high-voltage supply line (30) which terminates near the wall (33) of the insulating-material housing (11) and in that the electrical conductive connection from high-voltage supply line (30) and contact point (24.4) is embedded in an insulating manner in the embedding compound (32).

2. Line transformer according to Claim 1,
characterized
in that the insulating-material housing (11) has sliding-seat guides (15) into which the housing for the adjustment system (12) is pushed and in that the final position of the housing (12) is secured on the insulating-material housing (11) by means of a hook (16).

3. Line transformer according to Claim 1 or Claim 2,
characterized in that the contact point (24.4) is connected on the substrate plate (18) to a contact shoe (36) into which a contact blade (35) which is connected with the high-voltage supply line (30) and which is routed through the wall (33) is inserted as soon as the two housings (11, 12) are connected mechanically to one another.

4. Line transformer according to Claim 1 or 2,
characterized
in that the contact point (24.4) on the substrate plate (18) is connected to a conducting rubber into which a contact blade (35) connected to the high-voltage supply line (30) and plugged through the wall (33) is inserted as soon as the two housings (11, 12) are mechanically connected to one another.

5. Line transformer according to one of Claims 1 to 4,
characterized
in that, in the region of the insulating-material housing (11) in which the contact blade (35) emerges from the wall (33), channels (34) are present which ensure during the filling of the insulating-material housing (11) with embedding compound (32), that the segment (31) in the housing (12) in which the contact shoe (36) is disposed is completely filled with embedding compound (32).

6. Line transformer according to Claim 1,
characterized
in that the contact points (24.1, 24.2, 24.3) are connected to contact pins (27.1, 27.2, 27.3) and in that the contact pins (27.1, 27.2, 27.3) are routed through those surfaces (28) of the transformer (10) which are later mounted on the circuit board of the television set.

## Revendications

1. Transformateur de lignes pour récepteurs de télévision,
- avec au moins un enroulement primaire et un enroulement secondaire qui sont insérés dans un boîtier en matériau isolant (11) et coulés dans une masse de remplissage (32), et
- avec un agencement de réglage permettant le réglage de la tension de foyer et de grille 2, lequel est basée sur le principe de la modification de résistance, à laquelle est délivrée une tension continue constante afin de stabiliser la tension de grille 2 et dont le boîtier (12) est relié sans espacement avec le boîtier en matériau isolant (11) et dans lequel à l'intérieur du boîtier (12) est agencée une plaque de base (18), qui supporte une piste de résistance (19) et une pluralité de pistes conductrices (20, 23) et les pistes respectives (19, 20, 23) étant munies de points de contact (24) afin d'assurer leur contact électrique, caractérisé en ce que le point de contact (24.4), lequel forme le point de contact à haute tension sur la plaque de base (18), établit en même temps avec la liaison sans espacement des boîtiers (11, 12) une liaison électriquement conductrice avec une ligne à haute tension (30) se terminant à proximité de la paroi (33) du boîtier en matériau isolant (11) et en ce que la liaison électriquement conductrice entre la ligne à haute tension (30) et le point de contact (24.4) est noyée de manière isolante dans la masse de remplissage (32).

2. Transformateur de lignes selon la revendication 1, caractérisé en ce que le boîtier en matériau isolant (11) présente des guides à siège coulissant (15) dans lesquels est inséré le boîtier (12) destiné à l'agencement de réglage et en ce que la position finale du boîtier (12) est assurée sur le boîtier en matériau isolant (11) au moyen d'un crochet (16).

3. Transformateur de lignes selon la revendication 1 ou la revendication 2, caractérisé en ce que le point de contact (24.4) sur la plaque de base (18) est relié avec le coussinet de contact (36), dans lequel s'intercale une semelle de contact (35) reliée à une ligne à haute tension (30) et dirigée à travers la paroi (33), dès que les deux boîtiers (11, 12) sont reliés ensemble mécaniquement.

4. Transformateur de lignes selon la revendication 1 ou 2, caractérisé en ce que le point de contact (24.4) est relié sur la plaque de base (18) avec un caoutchouc conducteur, dans lequel s'insère une semelle de contact (35) reliée à une ligne à haute tension (30) et s'étendant à travers la paroi (33), dès que les deux boîtiers (11, 12) sont reliés ensemble mécaniquement.

5. Transformateur de lignes selon l'une des revendications 1 à 4, caractérisé en ce que des canaux (34) sont présents dans la zone du boîtier en matériau isolant (11), dans lequel la semelle de contact (35) sort de la paroi (33), lesquels garantissent lors du remplissage du boîtier en matériau isolant (11) avec la masse de remplissage (32) que la découpe (31) dans le boîtier (12), dans lequel est agencé le coussinet de contact (36), est complètement remplie par la masse de remplissage (32).

6. Transformateur de lignes selon la revendication 1, caractérisé en ce que les points de contact (24.1, 24.2, 24.3) sont reliés à des fiches de contact (27.1, 27.2, 27.3), et en ce que les fiches de contact (27.1, 27.2, 27.3) traversent lesdites surfaces (28) du transformateur (10), qui sont montées ultérieurement sur la plaquette à circuits imprimés du récepteur de télévision.
